# EUROPÄISCHE PATENTSCHRIFT

(11) **EP 0 702 017 B1**
(45) Veröffentlichungstag und Bekanntmachung des Hinweises auf die Patenterteilung: **14.11.2001**
(21) Anmeldenummer: 95111038.6
(22) Anmeldetag: 14.07.1995
(51) Int. Cl.: C07F 7/20, C07F 7/18

(54) **Verfahren zur Herstellung von chloridarmen bzw. chloridfreien aminofunktionellen Organosilanen**
Process for the preparation of aminofunctional organosilanes with low chlorine contamination
Procédé de préparation de organosilanes aminofonctionnelles exempts de chlorure

(30) Priorität: 14.09.1994 DE 4432638; 13.04.1995 DE 19513976
(43) Veröffentlichungstag der Anmeldung: 20.03.1996
(73) Patentinhaber: Degussa AG, 40474 Düsseldorf (DE)
(72) Erfinder: Seiler, Claus-Dietrich, Dr., D-79618 Rheinfelden (DE); Rauleder, Hartwig, Dr., D-79618 Rheinfelden (DE); Kötzsch, Hans-Joachim, Dr., D-79618 Rheinfelden (DE); Srebny, Hans-Günther, Dr., D-48249 Dülmen (DE)

(56) Entgegenhaltungen:
- EP-A- 0 464 819
- DE-A- 2 521 399
- US-A- 5 210 254

## Beschreibung

Die Erfindung betrifft ein Verfahren zur Herstellung von chloridfreien aminofunktionellen Organosilanen durch Umsetzung von chlorfunktionellen Organosilanen mit organischen Aminen oder Ammoniak und Abtrennen der dabei gebildeten organischen Hydrochloride oder des Ammoniumchlorids sowie erfindungsgemäß hergestellte aminofunktionelle Organosilane.

Aminofunktionelle Organosilane finden u. a. in der Gießereitechnik als Verarbeitungshilfsstoff Anwendung. Sie werden auch als Haftvermittler für lagerungsstabile Harze oder für Glasfaserschlichten eingesetzt.

Die Herstellung aminofunktioneller Organosilane erfolgt vorwiegend durch Umsetzung von chlorfunktionellen Organosilanen mit organischen Aminen verschiedenster Art oder Ammoniak, wobei in Abhängigkeit von den gewählten stöchiometrischen Verhältnissen der aminischen Komponente bzw. des Ammoniaks zum chlorfunktionellen Organosilan aminofunktionelle Organosilane gebildet werden. Bei der Herstellung einer aminofunktionellen Organosilanverbindung verfährt man in der Regel so, daß mindestens 2 Mole Amin bzw. Ammoniak pro Mol chlorfunktionelles Organosilan eingesetzt werden, so daß neben der Bildung des aminofunktionellen Organosilans noch genügend aminische Komponente zur Überführung des substituierten Chlors in das entsprechende Aminhydrochlorid bzw. Ammoniumchlorid zur Verfügung steht.

Für das Abtrennen des bei der Synthese entstandenen Aminhydrochlorids bzw. Ammoniumchlorids vom Zielprodukt, dem aminofunktionellen Organosilan, werden unterschiedliche Methoden angewendet.

So können die bei der Umsetzung von Ammoniak mit 3-Chlorpropyltriethoxysilan im gebildeten Aminopropyltriethoxysilan nicht gelösten Ammoniumchloridanteile durch einfache Filtration vom Produkt abgetrennt werden. Die danach im Aminopropyltriethoxysilan gelöst verbleibenden Ammoniumchloridanteile sind für viele Anwendungen dieses Aminosilans nachteilig.

Eine deutliche Absenkung des Ammoniumchloridgehaltes im Produkt ist erreichbar, wenn dem Umsetzungsrohprodukt vor der Filtration entsprechende Mengen eines inerten Mediums zugesetzt werden, z. B. Kohlenwasserstoffe wie Petrolether, Hexan oder Xylol, in dem zwar das Aminosilan, nicht jedoch das Ammoniumchlorid löslich ist. Trotz dieser Maßnahmen verbleibt ein Restgehalt an Ammoniumchlorid im Filtrat. Die Einsetzbarkeit des Aminosilans bleibt begrenzt.

In anderen Fällen kommt es bei der Herstellung von aminofunkionellen, speziell mehrfach aminofunktionellen Organosilanen, nach Beendigung der Umsetzung zur Bildung von flüssigen Zweiphasensystemen. So z. B. bei der Umsetzung von chlororganofunktionellen Silanen mit Ethylendiamin, wobei die obere Phase das Produkt verunreinigt mit überschüssigem Amin und dessen gelöstem Hydrochlorid enthält. Nach destillativer Entfernung der aminischen Einsatzkomponente verbleibt ein aminhydrochloridhaltiges zweifach aminofunktionelles Organosilan zurück, das in der vorliegenden Form nicht eingesetzt werden kann, da sein Chloridgehalt die Eigenschaften des Produktes ungünstig beeinflußt.

Bei Umsetzungen von chlorfunkionellen Organosilanen mit dreifach aminofunktionellen Aminen kommt es häufig weder zu Teilabscheidungen der gebildeten Aminhydrochloride in fester Form noch zur Bildung von Phasensystemen. Das Abtrennen der im gebildeten Reaktionssystem gelöst vorliegenden Aminhydrochloride kann nur durch entsprechende Verdünnung des Systems Reaktionsprodukt/Aminhydrochlorid/Amin mit solchen inerten Medien erfolgen, in denen das Aminhydrochlorid nicht löslich ist. Auch dabei verbleiben nach destillativer Entfernung des inerten Mediums und der in Überschuß eingesetzten aminischen Komponente unerwünschte Restmengen an Aminhydrochlorid im erhaltenen Produkt.

Trotz der bei der Herstellung von aminofunktionellen Organosilanen angewandten Maßnahmen zur Abtrennung der sich dabei bildenden organischen Hydrochloride bzw. des Ammoniumchlorids, enthalten die Produkte noch unerwünschte Mengen an Chloriden, die die Einsatzmöglichkeiten der so erhaltenen Produkte begrenzen bzw. die angestrebten Effekte negativ beeinflussen.

DE-OS 25 21 399 offenbart ein Verfahren zur Herstellung von Aminoalkylalkoxysilanen durch Umsetzung der entsprechenden Halogenalkylsilane mit überschüssigem Ammoniak bei Temperaturen über 80 °C, wobei ein Lösemittel zugegen sein kann und man dem bei der Aminierung erhaltenen Reaktionsgemisch nach der Filtration eine der im Gemisch enthaltenen Cl⁻-Menge äquivalente Menge Alkoholat, beispielsweise Natriummethanolat, zusetzt

Eine weiterentwickelte Methode zur Verringerung des Gehalts an saurem Chlorid in Alkoxysilanen lehrt EP 0 464 819 A1. Hierbei wird ein Alkoxysilan, das acides Chlorid enthält, zunächst mit einem Alkalialkoholat neutralisiert, filtriert und anschließend unter Ausschluß von Wasser ein Alkali- oder Erdalkalimetallsalz einer Säure mit einer Dissoziationskonstanten (Kₐ)> 10⁻¹⁵ im Überschuß zugesetzt, wobei ein Chloridgehalt im Produkt von bis zu 2 Gew.-ppm erzielt werden kann.

Der Erfindung liegt daher die Aufgabe zugrunde, ein Verfahren zur Herstellung von chloridfreien aminofunktionellen Organosilanen zu entwickeln.

Es wurde nun überraschender Weise gefunden, daß bei Zugabe von in Alkoholen gelösten Metallalkoxiden zu den mit unerwünschtem Chloridanteil noch belasteten, aminofunktionellen Organosilanen, das dabei gebildete Metallchlorid gut abtrennbar ist und so aminofunktionelle Organosilane erhältlich sind, deren Restchloridgehalt bis auf kleiner als 1 Gew.-ppm einstellbar ist, wenn man einen Teil der stöchiometrisch zur vollständigen Beseitigung des Chloridgehalts im Substrat erforderlichen Menge an Alkoxid zudosiert, umsetzen läßt, nach Entfernung der gebildeten Metallsalze den Restgehalt an organischem Hydrochlorid bzw. Ammoniumchlorid bestimmt und erneut, je nach Höhe des verbliebenen Restchloridgehalts im Substrat, einen weiteren Teil der stöchiometrisch erforderlichen Alkoxidmenge zudosiert und man sich auf diese Weise stufenweise an den gewünschten Restchloridgehalt im Substrat herantastet.

Gegenstand der vorliegenden Erfindung ist daher ein Verfahren zur Herstellung von chloridfreien aminofunktionellen Organosilanen durch Umsetzung von chlorfunktionellen Organosilanen mit organischen Aminen oder Ammoniak, Abtrennen der dabei gebildeten organischen Hydrochloride oder des Ammoniumchlorids, Zugabe von in Alkoholen gelösten Metallalkoxiden, wobei darüber hinaus vorliegende Mengen organischer Hydrochloride oder Ammoniumchlorid umgesetzt werden, und Abtrennen der dabei gebildeten Metallchloride, das dadurch gekennzeichnet ist, daß man von der stöchiometrisch zur vollständigen Beseitigung des Chloridgehalts im Substrat erforderlichen Menge an Alkoxid 50 bis 92 % zudosiert, umsetzen läßt, nach Entfernung der gebildeten Metallsalze den Restgehalt an organischem Hydrochlorid bzw. Ammoniumchlorid bestimmt und erneut, je nach Höhe des verbliebenen Restchloridgehalts im Substrat, 50 bis 92 % der stöchiometrisch erforderlichen Alkoxidmenge zudosiert und man sich auf diese Weise stufenweise an den gewünschten Restchloridgehalt im Substrat herantastet.

Die nach dem erfindungsgemäßen Verfahren herstellbaren aminofunktionellen Organosilane können durch die allgemeinen Formeln 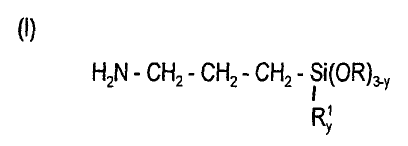 wobei R für einen Alkylrest mit 1 bis 4 C-Atomen und R¹ für einen Methyl- oder Phenylrest steht und y gleich 0 oder 1 oder 2 sein kann,

(II a) [(R¹O)₃Si-(CH₂)ₙ]ₘNH₃₋ₘ₋ₚ(CH₂-CH₂NH₂)ₚ ,

wobei R¹ für einen Alkylrest mit 1 bis 3 C-Atomen steht, n gleich 2 oder 3, p gleich 0 oder 1 und m gleich 1 oder 2 oder 3 sein kann,

(II b) [(R¹O)₃Si-(CH₂)ₙ]-(NH-CH₂-CH₂)ₚ-NH₂ ,

wobei R¹ für einen Alkylrest mit 1 bis 3 C-Atomen steht, n gleich 2 oder 3 und p gleich 2 oder 3 oder 4 sein kann, 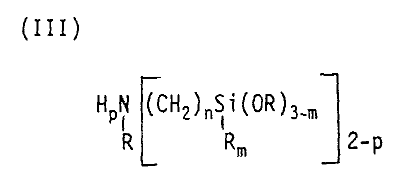 wobei n gleich 1 oder 2 oder 3, m gleich 0 oder 1 und p gleich 0 oder 1 sein kann und R für einen Alkylrest mit 1 bis 3 C-Atomen steht, und 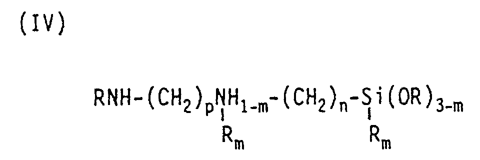 wobei n gleich 1 oder 2 oder 3, m gleich 0 oder 1 und p gleich 2 oder 3 sein kann und R für einen Alkylrest mit 1 bis 3 C-Atomen steht, beschrieben werden. Als Edukte hierfür kann man Chlororganosilan-Verbindungen der allgemeinen Formel 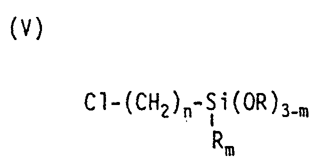 wobei n gleich 1 oder 2 oder 3 und m gleich 0 oder 1 oder 2 sein kann und R für einen Alkylrest mit 1 bis 3 C-Atomen steht, und Amine der allgemeinen Formeln

(VI) HₙN(R)₃₋ₙ,

wobei R für einen Alkylrest mit 1 bis 3 C-Atomen steht und n gleich 1 oder 2 oder 3 sein kann,

(VII) NH₂-CH₂-CH₂-(NH-CH₂-CH₂-)ₙ-NH₂,

wobei n gleich 0 oder 1 oder 2 oder 3 sein kann, und/oder 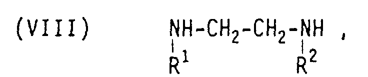 wobei R¹ und R² für einen Alkylrest mit 1 bis 3 C-Atomen stehen,
umsetzen. So kann man aminofunktionelle Organosilane erhalten, wie sie nachfolgend beispielhaft aufgeführt sind:

H₂N-CH₂-CH₂-CH₂-Si(OR)₃,

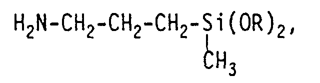

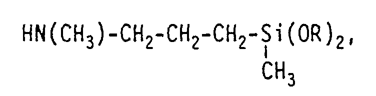

H₂N-CH₂-CH₂-NH-CH₂-CH₂-CH₂-Si(OR)₃,

H₂N-CH₂-CH₂-NH-CH₂-CH₂-NH-CH₂-CH₂-CH₂-Si(OR)₃,

wobei R z. B. für die CH₃- oder C₂H₅-Gruppe steht.

Nach dem Abtrennen der bei der Umsetzung gebildeten organischen Hydrochloride oder des Ammoniumchlorids von den aminofunktionellen Organosilanen werden diese erfindungsgemäß mit den in Alkoholen gelösten Metallalkoxiden zur weiteren Absenkung des noch vorliegenden Restchloridanteils behandelt. Vorzugsweise werden die in Alkoholen gelösten Metallalkohole in biszu äquivalenten Mengen bezüglich der organischen Hydrochloride bzw. des Ammoniumchlorids zugegeben.

Für das erfindungsgemäße Verfahren können alle bekannten Metallalkoxide der Elemente des Periodensystems verwendet werden, die in geeigneter Weise salzartige Metallhalogenide bilden.

Bevorzugt wird als Metallalkoxid ein Alkoxid der Alkalielemente und/oder der Erdalkalielemente eingesetzt. Besonders bevorzugt sind die Alkoxide des Natriums. Die Alkoxygruppen der Metallalkoxide können von primären, sekundären und tertiären Alkoholen mit 1 bis 6 C-Atomen abgeleitet werden, besonders bevorzugt werden Derivate primärer Alkohole mit 1 bis 3 C-Atomen.

In einer weiteren bevorzugten Ausführungsform kann die alkalische Komponente im Alkoxid mit den am Siliziumatom des aminofunkionellen Organosilans befindlichen Alkoxygruppen identisch sein. Als Lösemittel für das Metallalkoxid kann auch der zum jeweiligen Alkoxid korrespondierende Alkohol eingesetzt werden, so z. B. Methanol, Ethanol, n-Propanol, Isopropanol, Tertiärbutanol, Tertiäramylalkohol.

Für das erfindungsgemäße Verfahren verwendet man die Alkoxide bevorzugt in solche Mengen, daß kein stöchiometrischer Überschuß über die stöchiometrisch notwendige Menge hinaus bezogen auf den Gehalt an Chlorid im zu behandelnden Substrat vorliegt.

Die Absenkung des Chloridgehaltes in einem aminofunktionellen Organosilan kann man zweckmäßig so durchführen, daß man von der stöchiometrisch zur vollständigen Beseitigung des Chloridgehaltes im Substrat erforderlichen Mengen an Alkoxid nur ca. 70 - 80 % zudosiert, umsetzen läßt, erneut nach Entfernung der gebildeten Metallsalze den Restgehalt an organischem Hydrochlorid bzw. Ammoniumchlorid bestimmt und erneut, je nach Höhe des verbliebenen Restchloridgehalts im Substrat, 70 - 80 % der stöchiometrisch erforderlichen Alkoxidmenge zudosiert. Auf diese Weise tastet man sich stufenweise an den gewünschten Restchloridgehalt im Substrat heran, ohne das Produkt durch Alkoxidüberschuß der Gefahr einer Verfärbung auszusetzen.

Es hat sich ferner als vorteilhaft erwiesen, daß die Umsetzung der organischen Hydrochloride oder des Ammoniumchlorids mit den Metallalkoxiden unter Rühren bei Normaldruck durchgeführt wird.

Die Umsetzung der organischen Hydrochloride oder des Ammoniumchlorids mit den Metallalkoxiden kann vorzugsweise bei Temperaturen von 0 °C bis 100 °C, besonders bevorzugt bei Temperaturen von 20 °C bis 80 °C, ganz besonders vorzugsweise bei 20 °C bis 50 °C, durchgeführt werden. Es ist von Vorteil, die Umsetzungstemperatur so zu wählen, daß die Umsetzungsdauer und die Löslichkeit der gebildeten Metallsalze im Substrat bei der Umsetzungstemperatur minimiert sind. Die Umsetzung kann z. B. auch unter Schutzgasatmosphäre erfolgen.

Nach vollzogener Einstellung des gewünschten Restchloridgehaltes im vorliegenden Produkt erfolgt die Entfernung der gebildeten Metallsalze. Das Abtrennen der bei der Umsetzung gebildeten Metallchloride kann z. B. durch Filtration erfolgen. Das Produkt kann anschließend meist ohne weitere Behandlungen verwendet werden. Für bestimmte Einsatzgebiete kann eine destillative Entfernung des durch die Chloridbeseitigung eingeschleppten Alkohols erforderlich sein.

Die nach dem erfindungsgemäßen Verfahren entstehenden Metallsalze können zum Teil in schwer filtrierbarer Form anfallen. Über Filter ist ihre Entfernung dann unter Zuhilfenahme von geringen Mengen an Filterhilfsmitteln, z. B. auf Basis Kieselgur, möglich. Man kann aber auch das bei der Umsetzung gebildete Metallchlorid mit Hilfe eines Separators besonders wirkungsvoll abtrennen. Das Abtrennen von Metallsalzen mit Hilfe eines Separators bewährt sich in besonderem Maße bei der Herstellung von aminofunktionellen Organosilanen im technischen Maßstab.

Als chloridfreie aminofunktionelle Organosilane sollen im Sinne der vorliegenden Erfindung solche Produkte bezeichnet werden, deren Chloridgehalt kleiner gleich 1 Gew.-ppm beträgt. Durch das erfindungsgemäße Verfahren können nunmehr solche chloridfreien aminofunktionellen Organosilane bereitgestellt werden.

Im allgemeinen führt man das erfindungsgemäße Verfahren wie folgt durch:

Ein chlorfunktionelles Organosilan wird mit einem organischen Amin oder Ammoniak vorzugsweise in einem Behälter mit Heiz-, Kühl- und Rührvorrichtung, ggf. in einem Druckbehälter, umgesetzt. Dabei bildet sich ein aminofunktionelles Organosilan und organisches Hydrochlorid oder Ammoniumchlorid. Soweit das chloridhaltige Nebenprodukt salzartig anfällt, wird es vom Reaktionsprodukt abgetrennt, z. B. durch Filtration. Vorher kann auch ein inertes flüssiges Medium dem Reaktions- bzw. Produktgemisch zugesetzt werden, das nach dem Abtrennen des Salzanteils dann wieder aus dem Reaktionsprodukt zusammen mit überschüssigem Amin oder Ammoniak entfernt wird, z. B. durch Destillation. Das so erhaltene Vorprodukt wird nach üblichen Methoden auf seinen Chloridgehalt hin untersucht. Ein Teil einer entsprechend dem ermittelten Chloridgehalt zubereiteten äquivalenten Menge einer alkoholischen Metallalkoxidlösung wird dem Vorprodukt unter Rühren bei zuvor eingestellter Reaktionstemperatur zugegeben. Nach einiger Zeit wird eine Teilprobe entnommen, diese von dem entstandenen Metallchlorid befreit und der nunmehr vorliegende Chloridgehalt ermittelt. Ein weiterer Teil der noch vorhandenen alkoholischen Metallalkoxidlösung kann anschließend dem aminofunktionellen Organosilan entsprechend dem angestrebten Restchloridgehalt zugesetzt werden. Dieser Vorgang kann auch mehrfach mit kleineren Gabenmengen an Metallalkoxid unter Beachtung der Mengenverhältnisse bezüglich des Chlorids durchgeführt werden. Zuletzt wird das bei der Umsetzung der unerwünschten Chloridanteile mit dem Metallalkoxid entstandene Metallchlorid vom Zielprodukt abgetrennt. Soweit geringe Mengen an Alkohol im chloridarmen bzw. chloridfreien Endprodukt stören, können diese destillativ entfernt werden.

Die Erfindung wird durch die nachfolgenden Beispiele näher erläutert:

### Beispiel 1 (nicht erfindungsgemäß)

Im Autoklaven erfolgt die Umsetzung von 2 415 g (10 mol) 3-Chlorpropyltriethoxysilan mit 17 kg (1 000 mol) Ammoniak. Nach Entfernung des überschüssigen Ammoniaks liegt im Autoklaven das Reaktionsprodukt in Form eines aus Ammoniumchlorid und vorwiegend 3-Aminopropyltriethoxysilan bestehenden Salzbreies vor. Zur Reduzierung des im Organosilan gelösten Ammoniumchloridanteils wird der Autoklaveninhalt unter Rühren bei Raumtemperatur mit 1 318 g Hexan versetzt. Der Salzanteil wird durch Filtration abgetrennt. Das erhaltene Filtrat wird unter Vakuum destillativ vom Hexan befreit. Es bleibt ein Sumpf von 1 989 g zurück, in dem ein Chloridgehalt von 550 Gew.-ppm ermittelt wird. Dies entspricht einer Chloridmenge von 1 094 mg.

Das chloridhaltige Produkt wird in einen mit Doppelmantel versehenen 3-Liter-Fünfhalskolben quantitativ überführt, der mit Rührer, graduiertem Tropftrichter, Thermometer, Wasserkühler und Probenahmestutzen ausgerüstet ist. Der Kolbeninhalt wird unter intensivem Rühren auf 40 °C erwärmt. In den bürettenförmigen Tropftrichter werden 10,472 g einer 20 %igen ethanolischen Natriumethylat-Lösung eingewogen, die durch Zugabe von Ethanol auf ein Volumen von 15 ml verdünnt wird.

Unter Beibehaltung der intensiven Kolbenrührung werden 11,25 ml von der im Tropftrichter befindlichen Natriumethylat-Lösung in den 3-Literkolben einfließen gelassen. Nach einer Umsetzungszeit von ca. 15 Minuten wird dem Kolben eine Probe entnommen und in dieser nach Entfernung des gebildeten Natriumchlorids durch Filtration der verbliebene Chloridgehalt bestimmt. Er wird zu 145 Gew.-ppm ermittelt. Von den im Tropftrichter verbliebenen 3,75 ml Natriumethylat-Lösung werden weitere 2,8 ml dem Kolbeninhalt zudosiert. Nach Ablauf einer Reaktionszeit von 45 Minuten wird wieder eine Probe dem Kolben entnommen und analysiert. Der ermittelte Chloridgehalt beträgt 31 Gew.-ppm. Von den im Tropftrichter verbliebenen ca. 0,95 ml Natriumethylat-Lösung werden weitere 0,7 ml dem Kolbeninhalt zugefügt. Nach Ablauf einer Reaktionszeit von 1 Stunde wird erneut eine Probe entnommen und analysiert. Es wird ein Chloridgehalt von 12 Gew.-ppm ausgewiesen.

Der Kolbeninhalt wird dem Doppelmantel-Kolben entnommen und über einen Separator von dem gebildeten Natriumchlorid, das zum Teil kolloidal vorliegt, befreit. Das klar anfallende Filtrat des aminofunktionellen Organosilans wird auf seinen Chloridgehalt untersucht. Es wird ein Wert von 8 Gew.-ppm gefunden.

Das Produkt kann in dieser Form ohne weitere Behandlung in der Gießereitechnik als Haftvermittler zwischen Sanden und organischen Bindemitteln eingesetzt werden.

### Beispiel 2

Im Autoklaven erfolgt die Umsetzung von 1 985 g (10 mol) 3-Chlorpropyltrimethoxysilan mit 4 650 g (310 mol) Methylamin. Nach Entfernung des überschüssigen Methylamins liegt im Autoklaven das Reaktionsprodukt in Form eines aus Methylammoniumchlorid und vorwiegend 3-(Methylamino)-propyltrimethoxysilan bestehenden Salzbreies vor. Der Autoklaveninhalt wird unter Rühren bei Raumtemperatur mit 1 318 g Hexan versetzt. Der Salzanteil wird durch Filtration abgetrennt. Das erhaltene Filtrat wird unter Vakuum destillativ vom Hexan befreit. Es bleibt ein Sumpf von 1 685 g zurück, in dem ein Chloridgehalt von 1 675 ppm gefunden wird. Dies entspricht einer Chloridmenge von 2 822 mg.

Der Sumpf wird in einen mit Doppelmantel versehenen 3-Liter-Fünfhalskolben quantitativ überführt, der mit Rührer, graduiertem Tropftrichter, Thermometer, Wasserkühler und Probenahmestutzen ausgerüstet ist. Der Kolbeninhalt wird unter intensivem Rühren auf 45 °C erwärmt. In den bürettenförmigen Tropftrichter werden 10,00 g einer 30 %igen methanolischen Natriummethylat-Lösung eingewogen. Die im Tropftrichter befindliche Natriummethylat-Lösung wird unter Beibehaltung der starken Rührung im Verlauf von ½ Stunde in den Doppelmantelkolben einfließen gelassen. Nach Beendigung der Zugabe wird noch 30 Minuten nachreagieren gelassen und anschließend dem Kolbeninhalt eine Probe entnommen, in der nach Abtrennung des ausgefallenen Natriumchlorids der Chloridgehalt bestimmt wird. Im Filtrat wird ein Chloridgehalt von 490 Gew.-ppm gefunden, was einer Restchloridmenge von 826 mg entspricht. Nach Spülung des Tropftrichters wird in denselben eine Menge von 4,176 g der 30 %igen methanolischen Natriummethylat-Lösung eingewogen und anschließend mit Methanol auf ein Volumen von 15 ml verdünnt.

Unter Beibehaltung der Rührung werden im Verlauf von 30 Minuten 12 ml der Natriummethylat-Lösung aus dem Tropftrichter in die vorliegende Suspension einfließen lassen. Nach Ablauf einer Nachreaktionszeit von 15 Minuten wird dem Kolbeninhalt wiederum eine Probe entnommen und nach Abtrennung des ausgefallenen Natriumchlorids der Restchloridgehalt ermittelt. Der Chloridgehalt wird zu 80 Gew.-ppm bestimmt. Nach Zugabe von weiteren 2 ml Natriummethylat-Lösung und nach Ablauf einer Nachreaktionszeit von 25 Minuten hat eine untersuchte Probe einen Restchloridgehalt von 21 ppm. Eine weitere Zugabe von 0,7 ml der Natriummethylat-Lösung ergibt nach 30minütiger Nachreaktionszeit in einer Probe einen Chloridgehalt von 2 ppm. An diesem Punkt wird die Zugabe von Natriummethylat-Lösung abgebrochen und ein Teil des Kolbeninhalts über einen feinporigen Filter gegeben. Das Filtrat läuft trüb ab. Der nicht aufgegebene Teil des Kolbeninhaltes wird über einen Laborseparator geleitet. Das anfallende Filtrat ist klar. Der Chloridanteil im Filtrat wird zu < 1 ppm ermmittelt. Das erhaltene Produkt kann in der vorliegenden Form ohne weitere Behandlung als Haftvermittler in Glasfaserschlichten eingesetzt werden.

### Beispiel 3

Es wird verfahren wie in Beispiel 1 beschrieben. Das nach der destillativen Abtrennung des Hexans unter Vakuum erhaltene Sumpfprodukt wird jedoch anschließend unter Vakuum durch fraktionierte Destillation aufgearbeitet. Es wird eine Destillat-Fraktion erhalten, die ein Gewicht von 1 702 g besitzt und einen Chloridgehalt von 51 Gew.-ppm ausweist. Dies entspricht einer Chloridmenge von 87 mg. Das Destillat wird in einen mit Doppelmantel versehenen 3-Liter-Fünfhalskolben quantitativ überführt und unter Rühren auf 40 °C erwärmt. In den bürettenförmigen Tropftrichter werden 0,816 g 20 %ige ethanolische Natriumethylat-Lösung eingewogen und diese durch Zugabe von Ethanol auf 10 ml verdünnt.

Dem Destillat werden unter Rühren bei Normaldruck 7,5 ml der Natriumethylat-Lösung zugegeben. Nach einstündiger Umsetzung wird eine Probe entnommen und darin nach Entfernung des ausgefallenen Natriumchlorids der Chloridgehalt ermittelt. Es wird ein Wert von 15 Gew.-ppm gefunden. Von den im Tropftrichter verbliebenen 2,5 ml Natriumethylat-Lösung werden anschließend weitere 1,8 ml dem Kolbeninhalt zugeführt. Nach Ablauf einer Reaktionszeit von einer Stunde wird eine Probe entnommen und der Chloridgehalt bestimmt. Der ermittelte Wert beträgt 6 Gew.-ppm. Die weitere Zugabe von 0,6 ml der ethanolischen Natriumethylat-Lösung ergibt sich nach einer Reaktionszeit von 1 Stunde in der entnommenen Probe einen Chloridwert < 1 Gew.-ppm.

### Beispiel 4

In einem Autoklaven erfolgt die Umsetzung von 1 985 g 3-Chlorpropyltrimethoxysilan (10 mol) mit 3 000 g Ethylendiamin bei 90 °C. Das Reaktionsprodukt liegt nach Abkühlung in zwei Phasen vor, wobei sich in der oberen im wesentlichen das gesamte Produkt N(2-Aminoethyl)-3-Aminopropyltrimethoxysilan befindet. Die Abtrennung der oberen Phase ergibt eine Rohproduktmenge von 2 742 g. Der Chloridgehalt wird zu 3 510 Gew.-ppm ermittelt, was einem Gesamtchloridgehalt von 9 624 mg entspricht. Das abgetrennte Produkt wird in einen mit Doppelmantel versehenen 4-Liter-Fünfhalskolben quantitativ überführt, der mit Rührer, graduiertem Tropftrichter, Thermometer, Wasserkühler und Probenahmestutzen ausgerüstet ist. Der Kolbeninhalt wird unter Rühren auf 50 °C erwärmt. In den Tropftrichter werden 45 g 30 %ige methanolische Natriummethylat-Lösung eingewogen. Unter intensivem Rühren wird im Verlauf von 30 Minuten die im Tropftrichter vorgelegte Methylatmenge zugetropft. In der entnommenen Probe wird nach Entfernung des ausgefallenen Natriumchlorids ein Chloridgehalt von 310 Gew.-ppm ermittelt. Nach Spülung des Tropftrichters werden in diesen 4,300 g der 30 %igen methanolischen Natriummethylat-Lösung eingewogen und mit Methanol auf 15 ml verdünnt. Unter Beibehaltung der intensiven Kolbenrührung werden 11 ml der im Tropftrichter befindlichen Natriummethylat-Lösung in den 4-Literkolben einfließen gelassen und nach einer Zeit von 15 Minuten wird eine Probe entnommen. Die Chloridbestimmung im Filtrat der Probe ergibt einen Wert von 71 Gew.-ppm. Es erfolgt die Zugabe von weiteren 2,7 ml Methylat-Lösung aus dem Tropftrichter. Nach 25 Minuten wird eine Probe entnommen. Die Chloridbestimmung im Filtrat ergibt einen Wert von 27 Gew.-ppm. Die weitere Zugabe von 1,2 ml Methylat-Lösung erbringt nach 20 Minuten Reaktionszeit in einer Probe einen Chlorid-Restgehalt von 7 Gew.-ppm.

Das im 4-Literkolben vorliegende Produkt aus aminofunktionellen Organosilanen, Ethylendiamin, Natriumchlorid und Spurenmengen von Methanol wird in eine Destillationsapparatur überführt und im Vakuum bei starker Rührung von den Leichtsiedern befreit. Der Destillationssumpf wird nach Abkühlung über einen Separator geleitet und von dem teilweise kolloidal vorliegendem Natriumchlorid abgetrennt. Es wird eine klare Lösung erhalten. Der Chloridgehalt wird zu rund 1 Gew.-ppm bestimmt.

### Beispiel 5

In einen mit Doppelmantel versehenen 12-Liter-Vierhalskolben, der mit Rührer, Tropftrichter, Thermometer und Wasserkühler ausgerüstet ist, werden 5 150 g (50 mol) Diethylentriamin vorgelegt und auf 90 °C erwärmt. Unter Rühren werden im Verlauf von 2 Stunden 1 985 g (10 mol) 3-Chlorpropyltrimethoxysilan aus dem Tropftrichter zugegeben und mit dem vorgelegten Amin zur Reaktion gebracht. Anschließend wird das Reaktionsprodukt auf rund 70 °C abgekühlt und aus dem Tropftrichter im Verlauf von 1 Stunde mit 3,6 kg Xylol versetzt. Unter Rühren wird der Kolbeninhalt auf Zimmertemperatur abgekühlt und danach noch ca. 5 Stunden weiter gerührt. Der aus Aminoethylaminoethylaminopropyltrimethoxysilan, Diethylentriamin, Xylol und Diethylentriaminhydrochlorid bestehene Kolbeninhalt wird über eine Filternutsche gegeben und die flüssige Phase vom Feststoffanteil (Diethylentriaminhydrochlorid) getrennt. Es wird eine Filtratmenge von 9 205 g erhalten. Das Filtrat wird unter Vakuum destillativ aufgearbeitet. Dabei werden Xylol und Diethylentriamin abgetrennt und ein Destillationssumpf von 2 560 g erhalten, der im wesentlichen aus Aminoethylaminoethylaminopropyltrimethoxysilan besteht. Darin wird der Chloridgehalt zu 350 Gew.-ppm ermittelt, was einer Gesamtchloridmenge von 896 mg entspricht. In einem graduierten Tropftrichter werden 4,543 g 30 %ige methanolische Natriummethylat-Lösung eingewogen und mit Methanol auf 10 ml aufgefüllt. In den auf rund 50 °C abgekühlten Destillationssumpf werden 7,5 ml Natriummethylat-Lösung aus dem Tropftrichter unter starkem Rühren eingegeben. Nach 25 Minuten wird dem Kolben eine Probe entnommen und nach Abtrennen des ausgefallenen Natriumchlorids im Filtrat der Chloridgehalt mit 71 Gew.-ppm ermittelt. Von den im Tropftrichter verbliebenen 2,5 ml Natriummethylat-Lösung werden 1,7 ml dem Kolbeninhalt zugegeben. Nach 20 Minuten wird wiederum eine Probe genommen und der Chloridgehalt im Filtrat bestimmt. Der Wert beträgt 15 Gew.-ppm. Die weitere Zugabe von 0,4 ml Natriummethylat-Lösung ergibt nach Ablauf einer Nachreaktionszeit von 30 Minuten in einer entnommenen Probe einen Chloridgehalt von 1 - 2 Gew.-ppm.

Über einen Separator wird das zum Teil kolloidal ausgefallene Natriumchlorid von der flüssigen Phase abgetrennt. Es fällt eine klare Flüssigkeit an, in der ein Chloridgehalt < 1 Gew.-ppm bestimmt wird.

## Patentansprüche

1. Verfahren zur Herstellung von chloridfreien aminofunktionellen Organosilanen durch Umsetzung von chlorfunktionellen Organosilanen mit organischen Aminen oder Ammoniak, Abtrennen der dabei gebildeten organischen Hydrochloride oder des Ammoniumchlorids, Zugabe von in Alkoholen gelösten Metallalkoxiden, wobei darüber hinaus vorliegende Mengen organischer Hydrochloride oder Ammoniumchlorid umgesetzt werden, und Abtrennen der dabei gebildeten Metallchloride,
**dadurch gekennzeichnet,**
**daß** man von der stöchiometrisch zur vollständigen Beseitigung des Chloridgehalts im Substrat erforderlichen Menge an Alkoxid 50 bis 92 % zudosiert, umsetzen läßt, nach Entfernung der gebildeten Metallsalze den Restgehalt an organischem Hydrochlorid bzw. Ammoniumchlorid bestimmt und erneut, je nach Höhe des verbliebenen Restchloridgehalts im Substrat, 50 bis 92 % der stöchiometrisch erforderlichen Alkoxidmenge zudosiert und man sich auf diese Weise stufenweise an den gewünschten Restchloridgehalt im Substrat herantastet.

2. Verfahren nach Ansprpuch 1,
**dadurch gekennzeichnet,**
**daß** man von der stöchiometrisch zur vollständigen Beseitigung des Chloridgehalts im Substrat erforderlichen Menge an Alkoxid 70 bis 80 % zudosiert, umsetzen läßt, nach Entfernung der gebildeten Metallsalze den Restgehalt an organischem Hydrochlorid bzw. Ammoniumchlorid bestimmt und erneut, je nach Höhe des verbliebenen Restchloridgehalts im Substrat, 70 bis 80 % der stöchiometrisch erforderlichen Alkoxidmenge zudosiert und man sich auf diese Weise stufenweise an den gewünschten Restchloridgehalt im Substrat herantastet

3. Verfahren nach den Ansprüchen 1 und 2,
**dadurch gekennzeichnet,**
**daß** als Metallalkoxid ein Alkoxid der Alkalielemente und/oder der Erdalkalielemente eingesetzt wird.

4. Verfahren nach den Ansprüchen 1 bis 3,
**dadurch gekennzeichnet,**
**daß** die Umsetzung der organischen Hydrochloride oder des Ammoniumchlorids mit den Metallalkoxiden bei Temperaturen von 0 °C bis 100 °C durchgeführt wird.

5. Verfahren nach Anspruch 4,
**dadurch gekennzeichnet,**
**daß** die Umsetzung der organischen Hydrochloride oder des Ammoniumchlorids mit den Metallalkoxiden bei Temperaturen von 20 °C bis 80 °C durchgeführt wird.

6. Verfahren nach Anspruch 5,
**dadurch gekennzeichnet,**
**daß** die Umsetzung der organischen Hydrochloride oder des Ammoniumchlorids mit den Metallalkoxiden bei Temperaturen von 20 °C bis 50 °C durchgeführt wird.

7. Verfahren nach den Ansprüchen 1 bis 6,
**dadurch gekennzeichnet,**
**daß** die Umsetzung der organischen Hydrochloride oder des Ammoniumchlorids mit den Metallalkoxiden unter Rühren bei Normaldruck durchgeführt wird.

8. Verfahren nach den Ansprüchen 1 bis 7,
**dadurch gekennzeichnet,**
**daß** als Lösemittel für das Metallalkoxid der zum jeweiligen Alkoxid korrespondierende Alkohol eingesetzt wird.

9. Verfahren nach den Ansprüchen 1 bis 8,
**dadurch gekennzeichnet,**
**daß** das Abtrennen der bei der Umsetzung gebildeten Metallchloride durch Filtration erfolgt.

10. Verfahren nach den Ansprüchen 1 bis 9,
**dadurch gekennzeichnet,**
**daß** das bei der Umsetzung gebildete Metallchlorid mit Hilfe eines Separators abgetrennt wird.

## Claims

1. A process for preparing chloride-free aminofunctional organosilanes by reacting chlorofunctional organosilanes with organic amines or ammonia, separating off the organic hydrochlorides or ammonium chloride thus formed, adding metal alkoxides dissolved in alcohols, where further amounts of organic hydrochlorides or ammonium chloride present are reacted and separating off the metal chlorides formed, **characterized in that** 50-92% of the amount of alkoxide stoichiometrically required to completely eliminate the chloride content of the substrate are metered in, allowed to react, the residual content of organic hydrochloride or ammonium chloride is determined after removal of the metal salts formed and, depending on the level of residual chloride remaining in the substrate, 50-92% of the stoichiometrically required amount of alkoxide are again metered in, and in this way a controlled stepwise approach is made to the desired residual chloride content of the substrate.

2. A process according to claim 1, **characterized in that** 70-80% of the amount of alkoxide stoichiometrically required to completely eliminate the chloride content of the substrate are metered in, allowed to react, the residual content of organic hydrochloride or ammonium chloride is determined after removal of the metal salts formed and, depending on the level of residual chloride remaining in the substrate, 70-80% of the stoichiometrically required amount of alkoxide are again metered in, and in this way a controlled stepwise approach is made to the desired residual chloride content of the substrate.

3. A process according to either of claims 1 and 2,
**characterized in that** the metal alkoxide used is an alkoxide of the alkali metals and/or the alkaline earth metals.

4. A process according to any of claims 1 to 3,
**characterized in that** the reaction of the organic hydrochlorides or the ammonium chloride with the metal alkoxides is carried out at temperatures of from 0°C to 100°C.

5. A process according to claim 4, **characterized in that** the reaction of the organic hydrochlorides or the ammonium chloride with the metal alkoxides is carried out at temperatures of from 20°C to 80°C.

6. A process according to Claim 5, **characterized in that** the reaction of the organic hydrochlorides or the ammonium chloride with the metal alkoxides is carried out at temperatures of from 20°C to 50°C.

7. A process according to any of claims 1 to 6,
**characterized in that** the reaction of the organic hydrochlorides or the ammonium chloride with the metal alkoxides is carried out with stirring at atmospheric pressure.

8. A process according to any of claims 1 to 7,
**characterized in that** the solvent used for the metal alkoxide is the alcohol corresponding to the respective alkoxide.

9. A process according to any of claims 1 to 8,
**characterized in that** the metal chlorides formed in the reaction are separated off by filtration.

10. A process according to any of claims 1 to 8,
**characterized in that** the metal chloride formed in the reaction is separated off by means of a separator.

## Revendications

1. Procédé de préparation d'organosilanes dépourvus de chlore et fonctionnalisés par un groupe amine, par réaction d'organosilanes fonctionnalisés par un chlore avec des amines organiques ou de l'ammoniac, séparation des chlorhydrates organiques ou du chlorure d'ammonium formés ainsi, addition d'alkoxydes métalliques dissous dans des alcools, avec lesquels les quantités présentes en outre de chlorhydrates organiques ou de chlorure d'ammonium sont mises à réagir, et séparation des chlorures métalliques ainsi formés,
**caractérisé en ce qu'**
on admet par doses 50 à 92 % de la quantité stoechiométriquement nécessaire d'alkoxydes pour l'élimination complète de la teneur en chlorures dans le substrat, on fait réagir, on détermine après élimination des sels métalliques formés, la quantité résiduelle en chlorhydrates organiques ou en chlorure d'ammonium, et de nouveau selon le niveau de la quantité de chlorure résiduel demeurée dans le substrat on ajoute par doses 50 à 92 % de la quantité d'alkoxydes nécessaire stoechiométriquement et on teste par approximation graduellement de cette façon la teneur résiduelle en chlorures désirée dans le substrat.

2. Procédé selon la revendication 1,
**caractérisé en ce qu'**
on amène par doses 70 à 80 % de la quantité d'alkoxydes nécessaire stoechiométriquement pour l'élimination complète de la teneur en chlorures dans le substrat, on fait réagir, on détermine après élimination des sels métalliques formés, la teneur résiduelle en chlorhydrates organiques ou en chlorure d'ammonium, et de nouveau selon le niveau de la teneur en chlorures résiduels demeurés dans le substrat, on ajoute par doses 70 à 80 % de la quantité d'alkoxyde nécessaire stoechiométriquement et on teste par approximation de cette façon graduellement la teneur désirée en chlorures résiduels dans le substrat.

3. Procédé selon l'une quelconque des revendications 1 et 2,
**caractérisé en ce qu'**
on met en oeuvre comme alkoxyde métallique, un alkoxyde des éléments alcalins et/ou des éléments alcalino-terreux.

4. Procédé selon l'une quelconque des revendications 1 à 3,
**caractérisé en ce qu'**
on effectue la réaction des chlorhydrates organiques ou du chlorure d'ammonium avec les alkoxydes métalliques à des températures allant de 0°C à 100°C.

5. Procédé selon la revendication 4,
**caractérisé en ce que**
la réaction du chlorhydrate organique ou du chlorure d'ammonium avec les alkoxydes métalliques est effectuée à des températures allant de 20°C à 80°C.

6. Procédé selon la revendication 5,
**caractérisé en ce qu'**
on effectue la réaction du chlorhydrate organique ou du chlorure d'ammonium avec les alkoxydes métalliques à des températures allant de 20 à 50°C.

7. Procédé selon l'une quelconque des revendications 1 à 6,
**caractérisé en ce qu'**
on effectue la réaction du chlorhydrate organique ou du chlorure d'ammonium avec les alkoxydes métalliques sous agitation à pression normale.

8. Procédé selon l'une quelconque des revendications 1 à 7,
**caractérisé en ce qu'**
on met en oeuvre comme solvant pour l'alkoxyde métallique, l'alcool qui correspond à l'alkoxyde respectif.

9. Procédé selon l'une quelconque des revendications 1 à 8,
**caractérisé en ce que**
la séparation des chlorures métalliques formés au cours de la réaction s'effectue par filtration.

10. Procédé selon l'une quelconque des revendications 1 à 9,
**caractérisé en ce qu'**
on sépare le chlorure métallique formé au cours de la réaction à l'aide d'un séparateur.
